# EUROPÄISCHE PATENTANMELDUNG

(11) **EP 1 352 589 A1**
(43) Veröffentlichungstag der Anmeldung: **15.10.2003**
(21) Anmeldenummer: 03008274.7
(22) Anmeldetag: 09.04.2003
(51) Int. Cl.: A47B 5/06, A47B 85/06, A47B 31/06, A47C 17/62

(54) **Höhenverstellbarer Tisch**

(30) Priorität: 11.04.2002 DE 20205723 U
(71) Anmelder: Serma Handels- und Dienstleistungs GmbH, 77855 Achern (DE)
(72) Erfinder: Arbeiter, Frank, 32052 Herford (DE)
(74) Vertreter: Gesthuysen, von Rohr & Eggert

(57) **Zusammenfassung**

Die Erfindung betrifft einen höhenverstellbarer Tisch mit einer im wesentlichen waagerechten Tischplatte (1), mit einer Montageeinheit (3) zur höhenverstellbaren Fixierung einer der Tischkanten (4) an einem Trägerbauteil (5) und mit mindestens einem höhenverstellbaren Tischbein (6), wobei der Tisch in mehr als einer Gebrauchsstellung, zumindest jedoch in einer oberen und einer unteren Gebrauchsstellung, fixierbar ist. Es wird vorgeschlagen, daß die Montageeinheit (3) einen Schwenkhebel (7) sowie ein erstes Schwenklager (8) und ein zweites Schwenklager (9) aufweist, daß dem ersten Schwenklager (8) eine erste Schwenkachse (10) und dem zweiten Schwenklager (9) eine zweite Schwenkachse (11) zugeordnet ist, daß im montierten Zustand der Montageeinheit (3) der Schwenkhebel (7) über das erste Schwenklager (8) mit dem Trägerbauteil (5) und über das zweite Schwenklager (9) mit der Tischplatte (1) schwenkbar verbunden ist, daß die den beiden Schwenklagern (8, 9) zugeordneten Schwenkachsen (10, 11) zueinander im wesentlichen parallel angeordnet und durch einen Schwenkradius voneinander beabstandet sind, daß die Verstellung des Tischs zwischen seiner oberen und seiner unteren Gebrauchsstellung mit einer Schwenkbewegung des Schwenkhebels (7) verbunden ist, daß die Montageeinheit (3) einen mit dem Schwenkhebel (7) einerseits und dem Trägerbauteil (5) andererseits gekoppelten Kraftspeicher (12) aufweist und daß der Kraftspeicher (12) so angeordnet und ausgebildet ist, daß er über im wesentlichen den gesamten Schwenkbereich des Schwenkhebels (7) ein auf den Schwenkhebel (7) gegen ein Absenken des Tischs wirkendes Drehmoment erzeugt.

## Beschreibung

Die vorliegende Erfindung betrifft einen höhenverstellbaren Tisch mit den Merkmalen des Oberbegriffs von Anspruch 1 sowie eine Montageeinheit für einen höhenverstellbaren Tisch mit den Merkmalen des Oberbegriffs von Anspruch 26 und ein höhenverstellbares Tischbein für einen höhenverstellbaren Tisch mit den Merkmalen des Oberbegriffs von Anspruch 27.

Im Bereich der Ausstattung von Wohnwagen und Wohnmobilen sind höhenverstellbare Tische wegen ihrer hohen Flexibilität weit verbreitet. Üblicherweise sind derartige Tische zwischen zwei gegenüberliegenden Sitzbänken angeordnet und lassen sich zumindest in einer oberen und einer unteren Gebrauchsstellung fixieren.

Bei einer bekannten Konstruktion für einen freistehenden höhenverstellbaren Tisch ist ein Tischgestell mit integrierter Hubmechanik unterhalb der Tischplatte angeordnet. Neben der Tatsache, daß das mittig angeordnete Tischgestell die Beinfreiheit stark einschränkt, ist die Bedienung wenig komfortabel und die Sicherheit, insbesondere im Falle eine Auffahrunfalls, unbefriedigend.

Eine bessere Beinfreiheit bieten Tische, bei denen eine der Tischkanten über eine Montageeinheit an einem Trägerbauteil, üblicherweise an einer Tragwand fixiert ist und mindestens ein höhenverstellbares Tischbein vorgesehen ist, über das der Tisch abgestützt wird. Zur Fixierung der Tischkante an der Tragwand ist an der Tragwand eine Schiene angebracht, in die die Tischplatte eingehängt werden kann. Zur Höhenverstellung des Tischs ist es bekannt, mehrere übereinander angeordnete Schienen vorzusehen, in die die Tischplatte jeweils eingehängt werden kann. Das Tischbein ist dann ebenfalls höhenverstellbar, beispielsweise durch einen Teleskop- oder Klappmechanismus. Für die untere Gebrauchsstellung des höhenverstellbaren Tischs ist es auch bekannt, die Tischplatte auf Auflageleisten an der Sitzfläche der Sitzbänke aufzulegen.

Um eine möglichst stabile Fixierung der Tischplatte an der Tragwand zu erreichen, ist die Verbindung zwischen Tischplatte und Schiene in der Regel mit wenig Spiel ausgeführt, was wiederum eine genaue Führung der Tischplatte beim Einhängen erfordert. Dies ist bei Tischplatten mit Längen um ca. 1 m durch eine einzelne Person kaum möglich. Für die Höhenverstellung des oben beschriebenen Tischs, von dem die Erfindung ausgeht, sind also stets zwei Personen erforderlich.

Der Erfindung liegt das Problem zugrunde, den bekannten höhenverstellbaren Tisch derart auszugestalten und weiterzubilden, daß eine manuelle Höhenverstellung durch eine einzelne Person mit minimalem Kraftaufwand bei gleichzeitig hoher Flexibilität und Kompaktheit möglich ist.

Das oben genannte Problem wird zunächst durch einen höhenverstellbaren Tisch mit den Merkmalen des kennzeichnenden Teils von Anspruch 1 gelöst.

Wesentlich ist zunächst, daß die für die Höhenverstellung des Tischs erforderliche Verstellbewegung der Tischplatte über einen der Montageeinheit zugeordneten Schwenkhebel geführt ist. Die Montageeinheit stellt hier über den Schwenkhebel die Verbindung zwischen Trägerbauteil und Tischplatte dar. Über ein erstes Schwenklager ist der Schwenkhebel im montierten Zustand der Montageeinheit mit dem Trägerbauteil schwenkbar verbunden. Über ein zweites Schwenklager ist die Tischplatte mit dem Schwenkhebel schwenkbar verbunden. Die Verstellung des Tischs zwischen seiner oberen und seiner unteren Gebrauchsstellung ist also mit einer Schwenkbewegung des Schwenkhebels verbunden.

Von besonderer Bedeutung ist die Tatsache, daß die Montageeinheit einen Kraftspeicher aufweist. Ein Kraftspeicher ist eine Komponente, die durch Krafteinwirkung von ihrem entspannten Zustand in ihren gespannten Zustand bringbar ist. Durch Beaufschlagung des Kraftspeichers mit einer Kraft, die der Rückstellkraft des Kraftspeichers entspricht, kann der Kraftspeicher im gespannten Zustand gehalten werden. Vorliegend ist der Kraftspeicher nun derart mit dem Schwenkhebel einerseits und dem Trägerbauteil andererseits gekoppelt, daß der Kraftspeicher über im wesentlichen den gesamten Schwenkbereich des Schwenkhebels ein auf den Schwenkhebel gegen ein Absenken des Tischs wirkendes Drehmoment erzeugt.

Im Ergebnis wird hiermit erreicht, daß durch die Kraftwirkung des Kraftspeichers der Gewichtskraft der Tischplatte derart entgegengewirkt wird, daß insbesondere die Verstellung der Tischplatte "nach oben" erleichtert wird. Aber auch das Absenken der Tischplatte wird durch die Kraftwirkung des Kraftspeichers besonders komfortabel, da mit einem "Herunterfallen" der Tischplatte nicht zu rechnen ist.

Nach einer weiteren Lehre der Erfindung, der eigenständige Bedeutung zukommt, wird eine Montageeinheit als solche, wie oben beschrieben, beansprucht.

Schließlich wird nach einer weiteren Lehre der Erfindung, der ebenfalls eigenständige Bedeutung zukommt, ein höhenverstellbares Tischbein als solches beansprucht. Wesentlich ist hier, daß das höhenverstellbare Tischbein als klappbares Tischbein ausgestaltet ist und daß bei einer Verstellung des Tischs von der unteren Gebrauchsstellung in die obere Gebrauchsstellung das Ausklappen des Tischbeins selbsttätig erfolgt. Es darf darauf hingewiesen werden, daß ein derartiges höhenverstellbares Tischbein grundsätzlich für alle möglichen höhenverstellbaren Tische anwendbar ist.

Natürlich gibt es eine Vielzahl von Möglichkeiten, die Lehre der Erfindung auszugestalten und weiterzubilden. Hierzu darf auf die Unteransprüche verwiesen werden.

Besonders vorteilhaft ist die Auslegung des Kraftspeichers gemäß Anspruch 2, wenn das vom Kraftspeicher erzeugte Drehmoment gerade so groß ist, daß bei Einwirkung vorzugsweise etwa der halben Gewichtskraft der Tischplatte auf den Schwenkhebel ein stabiles Gleichgewicht herrscht. Etwa die halbe Gewichtskraft der Tischplatte wirkt genau dann auf den Schwenkhebel, wenn die Tischplatte an ihrer der Montageeinheit gegenüberliegenden Tischkante durch eine Person gehalten wird.

Mit dieser Auslegung des Kraftspeichers sind für eine Höhenverstellung der Tischplatte von der der Montageeinheit gegenüberliegenden Tischkante aus also im wesentlichen lediglich Trägheitskräfte zu überwinden. Die Höhenverstellung läßt sich fast ausschließlich über eine horizontale Krafteinwirkung eben von der genannten Tischkante aus bewerkstelligen. Mit horizontaler Krafteinwirkung ist hier eine Kraftwirkung in der Ebene der Tischplatte gemeint.

Von besonderer Bedeutung ist weiterhin die Ausgestaltung der Montageeinheit gemäß Anspruch 6. Hiermit wird eine besonders kompakte Ausgestaltung erreicht. Außerdem eröffnen sich mit einem derartigen Gehäuse designerische Möglichkeiten.

Eine weitere bevorzugte Ausgestaltung zeigt Anspruch 7. Es ist hier vorteilhaft, daß die Vorspannung des Kraftspeichers von außen einstellbar ist. Damit ist es möglich, die Montageeinheit auf Tischplatten unterschiedlichen Gewichts einzustellen.

Eine besonders flexible Ausgestaltung stellt der höhenverstellbare Tisch nach Anspruch 9 dar. Mit den hier vorgeschlagenen Maßnahmen ist es möglich, die Tischplatte mit minimalem Aufwand an die Montageeinheit anzukoppeln und auch leicht wieder zu entfernen.

Der Anspruch 10 betrifft eine vorteilhafte Realisierung der Montageeinheit, die zu einem besonders einfachen Aufbau und einer besonders einfachen Fertigung der Montageeinheit führen.

Eine besonders einfache Fixierung des Tischs in einer seiner Gebrauchsstellungen wird in Anspruch 12 vorgeschlagen. Es ist hier hervorzuheben, daß durch das Aufstellen des Tischbeins mit minimalem Aufwand ein in sich stabiles System geschaffen wird.

In der lediglich ein Ausführungsbeispiel der Erfindung darstellenden Zeichnung zeigt
- Fig. 1: eine Gesamtansicht des erfindungsgemäßen höhenverstellbaren Tischs in seiner oberen Gebrauchsstellung,
- Fig. 2: den höhenverstellbaren Tisch aus Fig. 1 in seiner unteren Gebrauchsstellung,
- Fig. 3: eine Gesamtansicht der Montageeinheit mit Teilschnitten,
- Fig. 4: den höhenverstellbaren Tisch aus Fig. 1 bei unmontierter Tischplatte,
- Fig. 5: den höhenverstellbaren Tisch aus Fig. 1 in einer Ansicht schräg von unten,
- Fig. 6: eine weitere Ausführungsform des erfindungsgemäßen höhenverstellbaren Tischs,
- Fig. 7: ein höhenverstellbares Tischbein eines höhenverstellbaren Tischs im ausgeklappten Zustand,
- Fig. 8: das höhenverstellbare Tischbein gemäß Fig. 7 in der Blockierstellung,
- Fig. 9: das höhenverstellbare Tischbein gemäß Fig. 7 im eingeklappten Zustand und
- Fig. 10: das höhenverstellbare Tischbein gemäß Fig. 7 während der Verstellung des Tischbeins in den ausgeklappten Zustand.

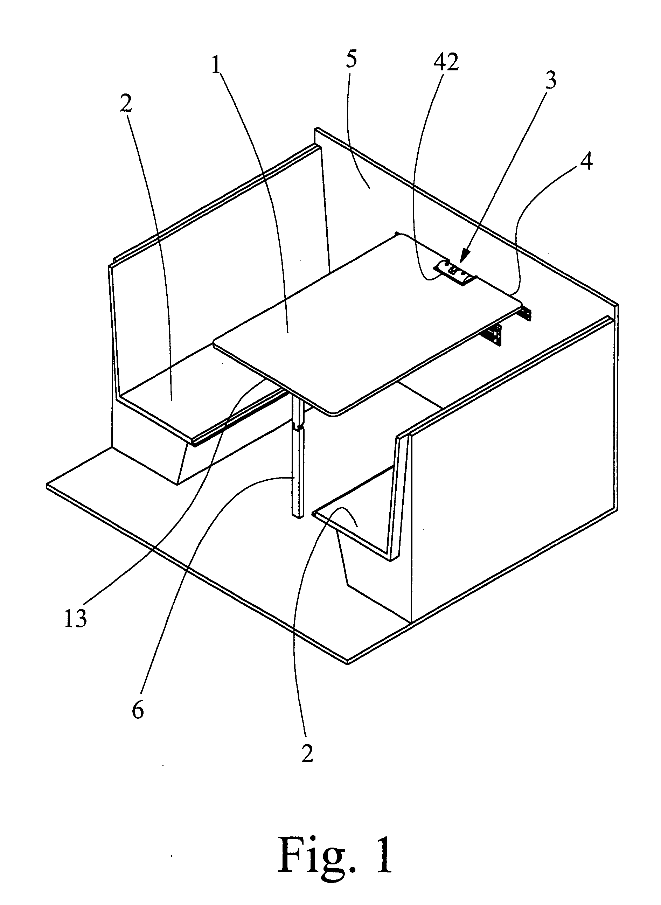

Fig. 1 zeigt einen höhenverstellbaren Tisch mit einer im wesentlichen waagerechten Tischplatte 1, die zwischen zwei gegenüberliegenden Sitzbänken 2 angeordnet ist. Weiter ist eine Montageeinheit 3 dargestellt, die zur höhenverstellbaren Fixierung einer der Tischkanten 4 an einem Trägerbauteil 5 dient. Schließlich ist in Fig. 1 ein höhenverstellbares, umklappbares Tischbein 6 dargestellt.

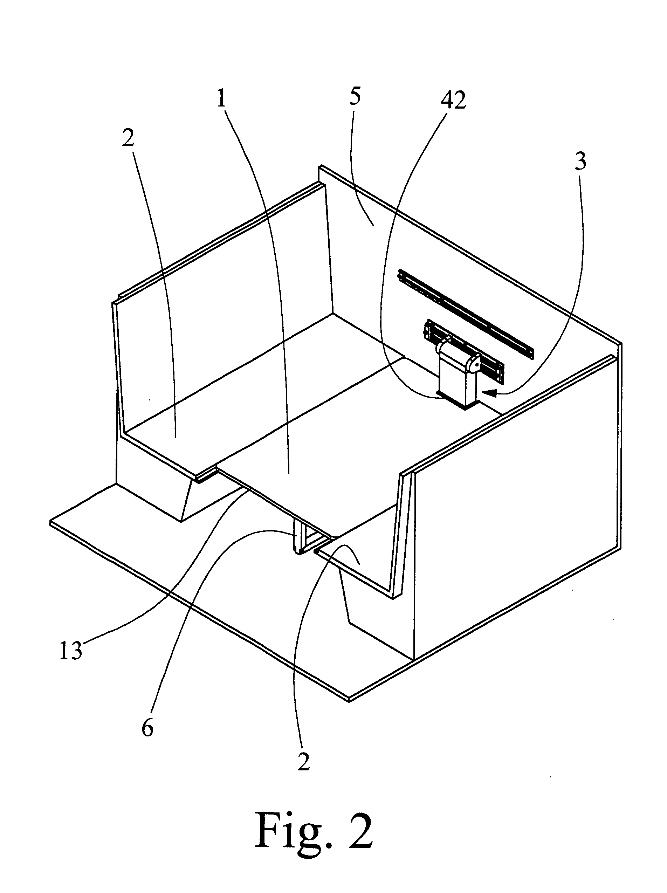

Fig. 2 zeigt den Tisch in seiner unteren Gebrauchsstellung. Es ist zu erkennen, daß hier das Tischbein 6 umgeklappt ist. Grundsätzlich ist es auch möglich, daß der Tisch in mehr als nur zwei Gebrauchsstellungen fixierbar ist.

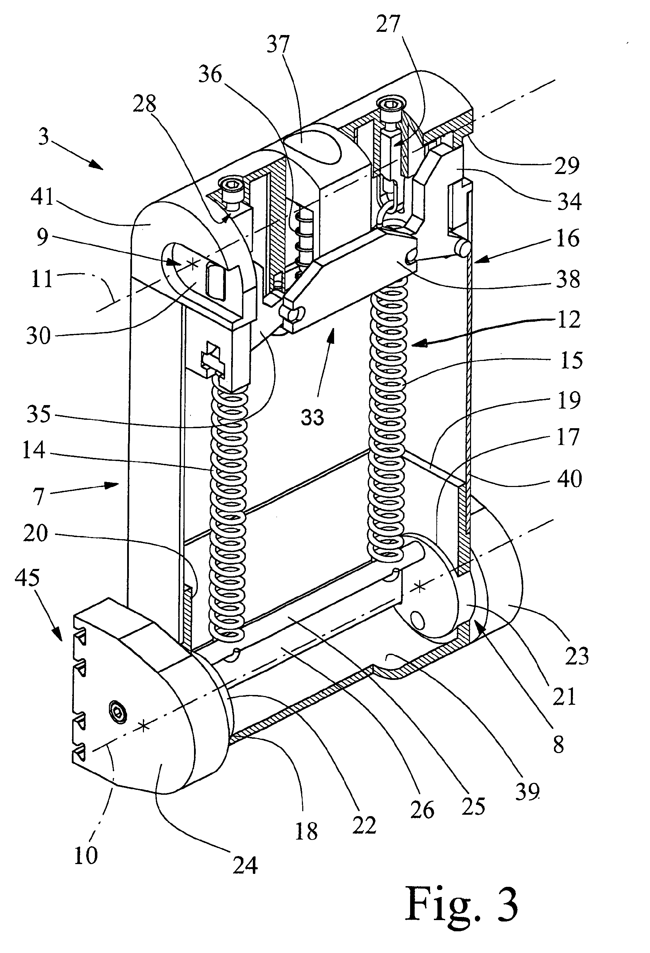

Fig. 3 zeigt die Montageeinheit 3 des höhenverstellbaren Tischs im unmontierten Zustand. Die Montageeinheit 3 weist einen Schwenkhebel 7 auf, der sich im dargestellten Ausführungsbeispiel zwischen einem ersten Schwenklager 8 und einem zweiten Schwenklager 9 erstreckt. Das erste Schwenklager 8 dient dazu, die Montageeinheit 3 im montierten Zustand mit dem Trägerbauteil 5 um eine erste Schwenkachse 10 schwenkbar zu verbinden. Das zweite Schwenklager 9 erlaubt die um eine zweite Schwenkachse 11 schwenkbare Verbindung zwischen der Montageeinheit 3 und der Tischplatte 1.

Aus den Fig. 1 und 2 wird deutlich, daß im montierten Zustand der Montageeinheit 3 eine Höhenverstellung der Tischplatte 1 grundsätzlich mit einer Schwenkbewegung des Schwenkhebels 7 verbunden ist. Die zur Höhenverstellung erforderliche Bewegung der Tischplatte 1 wird also durch den Schwenkhebel 7 geführt.

Die Montageeinheit 3 weist einen im montierten Zustand mit dem Schwenkhebel 7 einerseits und dem Trägerbauteil 5 andererseits gekoppelten Kraftspeicher 12 auf, der über im wesentlichen den gesamten Schwenkbereich des Schwenkhebels 7 ein auf den Schwenkhebel 7 gegen ein Absenken des Tischs wirkendes Drehmoment erzeugt. Auf die nähere Ausgestaltung des Kraftspeichers 12 wird im folgenden noch weiter eingegangen.

Der Auslegung des Kraftspeichers 12 sowie der Anordnung des Kraftspeichers 12 in der Montageeinheit 3 kommt für die gewünschte komfortable Höhenverstellung besondere Bedeutung zu:

Es ist vorgesehen, daß die Höhenverstellung des Tischs von einer einzigen Person durch Krafteinwirkung auf die der Montageeinheit 3 gegenüberliegenden Tischkante 13 gesteuert wird. Bei umgeklapptem Tischbein 6 und nicht auf den Sitzbänken 2 aufliegender Tischplatte 1 hält der Benutzer etwa die halbe Gewichtskraft der Tischplatte 1, während die andere Hälfte der Gewichtskraft der Tischplatte 1 von der Montageeinheit 3 übernommen werden muß, um ein stabiles Gleichgewicht zu erreichen. Die Kennlinie des Kraftspeichers 12 ist nun derart mit der Anordnung des Kraftspeichers 12 abgestimmt, daß dieses Gleichgewicht in nahezu dem gesamten Schwenkbereich des Schwenkhebels 7 gegeben ist. Mit der Kennlinie des Kraftspeichers 12 ist hier die Rückstellkraft als Funktion der Auslenkung des Kraftspeichers 12 zu verstehen.

Im Ergebnis sind zur Höhenverstellung des Tischs im wesentlichen lediglich Trägheitskräfte der Tischplatte 1 und ggf. weiterer Anbauteile zu überwinden. Wie sich aus den Fig. 1 und 2 entnehmen läßt, läßt sich die Höhenverstellung im wesentlichen über die Einwirkung einer horizontalen, d. h. in der Ebene der Tischplatte 1 wirkenden Kraft bewerkstelligen. Lediglich dann, wenn der Schwenkhebel 7 senkrecht zum Trägerbauteil 5 steht, ist eine geringe Kraftkomponente senkrecht zur Ebene der Tischplatte 1 erforderlich.

Für die Realisierung des Kraftspeichers 12 sind zahlreiche Möglichkeiten aus dem Stand der Technik bekannt. Hierunter fallen pneumatische Kraftspeicher, insbesondere jedoch Federkraftspeicher. Eine besonders kompakte Anordnung läßt sich mit dem in Fig. 3 dargestellten Kraftspeicher 12 erreichen. Dieser Kraftspeicher 12 ist als linear erstreckter Kraftspeicher 12 ausgebildet. Der Kraftspeicher 12 weist zwei Schraubenfedern 14, 15 auf.

Die beiden Schraubenfedern 14, 15 sind nun so angeordnet, daß sie beim Verschwenken des Schwenkhebels 7 von der in Fig. 3 dargestellten oberen Gebrauchsstellung in die untere Gebrauchsstellung gestreckt werden, also auf Zug belastet werden. Dieser Effekt wird dadurch erzielt, daß der Kraftspeicher 12, also die Schraubenfedern 14, 15 nicht in der ersten Schwenkachse 10, sondern außerhalb davon aufgehangen sind. Dadurch ergibt sich beim Verschwenken des Schwenkhebels 7 eine Dehnung der Schraubenfedern 14, 15.

Zusammenfassend ist festzustellen, daß das durch die Schraubenfedern 14, 15 erzeugte Drehmoment wesentlich von der Lage der Aufhängungen der Schraubenfedern 14, 15 sowie von der Federkennlinie abhängt. Vorliegend ist die Federkennlinie derart gewählt, daß eine nur geringe Dehnung der Schraubenfedern 14, 15 erforderlich ist.

Die Kraftwirkungslinie der Kraftwirkung des Kraftspeichers 12 verläuft vorzugsweise im wesentlichen über den gesamten Schwenkbereich des Schwenkhebels 7 oberhalb der ersten Schwenkachse 10. Hiermit ist gemeint, daß die Kraftwirkungslinie die vertikale, senkrecht zur Ebene der montierten Tischplatte 1, durch die Schwenkachse 10 verlaufende Ebene oberhalb - und nicht unterhalb - der Schwenkachse 10 schneidet. Mit diesem Verlauf der Kraftwirkungslinie wird erreicht, daß der beim Absenken des Tischs auf Zug belastete Kraftspeicher 12 ein dem Absenken entgegenwirkendes Drehmoment erzeugt.

Um zu erreichen, daß der Schwenkhebel 7 in der oberen Gebrauchsstellung, wie in Fig. 3 dargestellt, durch den Kraftspeicher 12 in dieser Gebrauchsstellung gehalten wird, ist es in bevorzugter Ausgestaltung vorgesehen, daß die Kraftwirkungslinie der Kraftwirkung des Kraftspeichers 12 zwischen Trägerbauteil 5 und Schwenkhebel 7 jedenfalls in der oberen Gebrauchsstellung, vorzugsweise auch in der unteren Gebrauchsstellung, zum Trägerbauteil 5 hin seitlich der Schwenkachse 10 verläuft. Dies bedeutet, daß die Kraftwirkungslinie die horizontale, parallel zur Ebene der montierten Tischplatte 1, durch die Schwenkachse 10 verlaufende Ebene seitlich der Schwenkachse 10 auf der dem Trägerbauteil 5 zugewandten Seite schneidet.

Die oben beschriebene Ausrichtung der Kraftwirkungslinie läßt sich dadurch erzielen, daß der Kraftspeicher 12 mit dem Trägerbauteil 5 im montierten Zustand an einem Angriffspunkt oberhalb der Schwenkachse 10 und vorzugsweise zum Trägerbauteil 5 hin seitlich der Schwenkachse 10 gekoppelt ist.

Eine derartige Kopplung läßt sich mit der in Fig. 3 dargestellten Aufhängung der Schraubenfedern 14, 15 im Bereich der Schwenkachse 10 gewährleisten. Es ist dargestellt, daß die Aufhängung der Schraubenfedern 14, 15 bezogen auf die erste Schwenkachse 10 nach oben und gleichzeitig in Richtung des Trägerbauteils 5 versetzt ist. Damit ist gewährleistet, daß insbesondere bei nicht montierter Tischplatte 1 der Schwenkhebel 7 in der in Fig. 3 dargestellten, oberen Gebrauchsstellung gehalten wird. Durch die dargestellte Anordnung der Aufhängung der Schraubenfedern 14, 15 wird weiter erreicht, daß der Schwenkhebel 7 auch in der unteren Gebrauchsstellung durch die Schraubenfedern 14, 15 in dieser unteren Gebrauchsstellung gehalten wird.

In weiterer bevorzugter Ausgestaltung weist die Montageeinheit 3 ein Gehäuse 16 auf, das im wesentlichen alle mechanischen Komponenten der Montageeinheit 3, insbesondere den Kraftspeicher 12, vollständig umschließt. Neben einem gefälligen optischen Eindruck wird damit erreicht, daß Verschmutzungen der Mechanik vermieden werden.

In einer besonders kompakten Ausgestaltung ist es vorgesehen, das erste Schwenklager 8 durch zwei Lagerbohrungen 17, 18 in gegenüberliegenden Wandungen 19, 20 des Gehäuses 16 der Montageeinheit 3 zu bilden, in denen zwei zu den Lagerbohrungen 17, 18 korrespondierende, im montierten Zustand mit dem Trägerbauteil 5 verbundene Zapfen 21, 22 laufen. Die Zapfen 21, 22 sind im montierten Zustand mit dem Trägerbauteil 5 über jeweils eine Lagerkonsole 23, 24 verbunden. Durch die beschriebene Ausgestaltung des ersten Schwenklagers 8 ist eine besonders großflächige Lagerung möglich, die die Schwenkbewegung des Schwenkhebels 7 dämpft und im Ergebnis zu einem weichen Bewegungsablauf führt.

Zwischen den beiden Zapfen 21, 22 des ersten Schwenklagers 8, und damit zwischen den Lagerkonsolen 23, 24 ist im Inneren des Gehäuses 16 eine Querstrebe - Federhaltestange 25 - vorgesehen. Die Federhaltestange 25 übernimmt vorliegend die Aufgabe, eine Aufhängung für die beiden Schraubenfedern 14, 15 am Trägerbauteil 5 bereitzustellen. In Fig. 3 ist zu erkennen, daß die Federhaltestange 25, wie weiter oben beschrieben, außerhalb der ersten Schwenkachse 10 angeordnet ist.

In weiterer Ausgestaltung ist ein Verdrehsicherungsprofil 26 vorgesehen, das die beiden Zapfen 21, 22 vorzugsweise stirnseitig miteinander verbindet. Das Verdrehsicherungsprofil 26 ist vorzugsweise torsionssteif ausgebildet, so daß sich eine besonders hohe Steifigkeit des Gesamtsystems ergibt.

Die Aufhängung des Kraftspeichers 12, in bevorzugter Ausgestaltung der Schraubenfedern 14, 15, am Schwenkhebel 7 ist über eine einstellbare Aufhängung 27, 28 vorgesehen. Über die einstellbare Aufhängung 27, 28 läßt sich die Vorspannung des Kraftspeichers 12 bzw. der Schraubenfedern 14, 15 über Einstellschrauben verstellen. Dies ist insbesondere dann erforderlich, wenn eine einzige Montageeinheit 3 auf mehrere Tischplatten 1 mit verschiedenen Gewichten einstellbar sein soll.

Weitere Möglichkeiten zur Anpassung des vom Kraftspeicher 12 erzeugten Drehmoments bestehen in der Variation der Anzahl der Schraubenfedern 14, 15 oder aber in der Änderung der geometrischen Verhältnisse, wie z. B. der Änderung der Position der Federhaltestange 25 bezogen auf die erste Schwenkachse 10.

Das zweite Schwenklager 9, über das der Schwenkhebel 7 mit der Tischplatte 1 schwenkbar verbindbar - im montierten Zustand verbunden - ist, wird in weiterer Ausgestaltung durch seitliche kulissenartige Ausformungen 29, 30 an der Montageeinheit 3 und durch korrespondierende Zapfen 31, 32 an der Tischplatte 1 gebildet. Beim Verschwenken der Tischplatte 1 relativ zum Schwenkhebel 7 laufen die Zapfen 31, 32 in den kulissenartigen Ausformungen 29, 30.

Ein besonders hohes Maß an Flexibilität ergibt sich in einer weiteren Ausgestaltung dadurch, daß die Verbindung zwischen Schwenkhebel 7 und Tischplatte 1 ohne die Anwendung zusätzlicher Hilfsmittel, insbesondere Werkzeug o. dgl., lösbar ist. Hierfür ist vorzugsweise vorgesehen, daß die Montageeinheit 3 eine Verriegelungseinrichtung 33 aufweist, durch deren Betätigung die schwenkbare Verbindung zwischen Schwenkhebel 7 und Tischplatte 1 lösbar ist.

Wie in Fig. 3 dargestellt, läßt sich die erläuterte Lösbarkeit der schwenkbaren Verbindung zwischen Schwenkhebel 7 und Tischplatte 1 mit den kulissenartigen Ausformungen 29, 30 des zweiten Schwenklagers 9 besonders einfach realisieren. Die kulissenartigen Ausformungen 29, 30 sind in einem Teilbereich offen ausgebildet, so daß die an der Tischplatte 1 angeordnete Zapfen 31, 32 in die kulissenartigen Ausformungen 29, 30 eingeführt werden können. Um die Zapfen 31, 32 in den kulissenartigen Ausformungen 29, 30 zu halten, ist eine besondere Ausgestaltung der oben beschriebenen Verriegelungseinrichtung 33 vorgesehen, die bei deren Betätigung die Zapfen 31, 32 der Tischplatte 1 freigibt.

Hierfür sind Verrasthebel 34, 35 vorgesehen, die in eine Sperr- und eine Freigabestellung bringbar sind. Bei unbetätigter Verriegelungseinrichtung 33 befinden sich die Verrasthebel 34, 35 in ihrer Sperrstellung und blockieren die kulissenartigen Ausformungen 29, 30 derart, daß die Zapfen 31, 32 der Tischplatte 1 in den kulissenartigen Ausformungen 29, 30 gehalten werden. Die Verrasthebel 34, 35 weisen Einführschrägen auf, so daß bei unbetätigter Verriegelungseinrichtung 33 die Einführbewegung der Zapfen 31, 32 der Tischplatte 1 eine Verstellung der Verrasthebel 34, 35 in ihre Freigabestellung bewirkt, um dann bei eingeführten Zapfen 31, 32 wieder in die Sperrstellung zurückzuschnappen. Hierfür ist eine entsprechende Feder 36 in der Verriegelungseinrichtung 33 vorgesehen. Zur Betätigung der Verriegelungseinrichtung 33 ist ein von außen betätigbarer Entriegelungsknopf 37 vorgesehen, der über einen Mitnehmer 38 mit den beiden Verrasthebeln 34, 35 gekoppelt ist. Die Verrasthebel 34, 35 lassen sich durch Betätigung des Entriegelungsknopfs 37 in ihre Entriegelungsstellung bringen. Der Entriegelungsknopf 37 wird durch die Feder 36 in seine unbetätigte Stellung zurückgedrückt.

Besonders vorteilhaft ist es, wenn der Entriegelungsknopf 37, wie in Fig. 3 dargestellt, am oberen Ende der Montageeinheit 3, an dem sich das zweite Schwenklager 9 befindet, angeordnet ist. Damit ist gewährleistet, daß eine Betätigung des Entriegelungsknopfs 37 ohne weitere Anstrengung lediglich im Bereich der oberen Gebrauchsstellung möglich ist. Dies mindert die Gefahr einer Fehlbedienung.

Der oben beschriebene, konstruktive Aufbau der Montageeinheit 3 ermöglicht eine fertigungstechnisch besonders günstige Realisierung. In besonders bevorzugter Ausgestaltung ist es vorgesehen, das Gehäuse 16 der Montageeinheit 3 in drei getrennten Teilgehäusen 39, 40, 41 zu realisieren. Das erste Teilgehäuse - Lagergehäuse 39- weist die Lagerbohrungen 17, 18 für das erste Schwenklager 8 auf. Das zweite Teilgehäuse - Verbindungsrohr 40 - bildet im wesentlichen den Schwenkhebel 7. Das dritte Teilgehäuse - Tischaufnahmegehäuse 41 - beinhaltet das zweite Schwenklager 9 sowie die Verriegelungseinrichtung 33.

Zur einfachen Montage dieser drei Teilgehäuse 39, 40, 41 ist es vorgesehen, die drei Teilgehäuse 39, 40, 41 ineinander und/oder aufeinander steckbar auszugestalten.

Das in Fig. 3 dargestellte Ausführungsbeispiel weist ein Verbindungsrohr 40 auf, in das das Lagergehäuse 39 und das Tischaufnahmegehäuse 41 eingesteckt sind. Durch die Federkraft der beiden Schraubenfedern 14, 15 werden die drei Teilgehäuse 39, 40, 41 zusammengehalten. Es sind also keine aufwendigen Montagemittel, Schrauben o. dgl. erforderlich. Neben der reduzierten Teileanzahl und der einfachen Montage ist hier besonders hervorzuheben, daß Maßtoleranzen von einzelnen Komponenten durch eine derartige Montage leicht ausgeglichen werden können.

Die erläuterte "elastische" Ausgestaltung der Montageeinheit 3 kann auch bei hohen Beschleunigungen, wie beispielsweise bei einem Auffahrunfall nützlich sein. Dann kann nämlich zumindest ein Teil der Energie von den beiden Schraubenfedern 14, 15 aufgenommen werden, so daß ein "Ausreißen" der Tischplatte 1 vermieden wird.

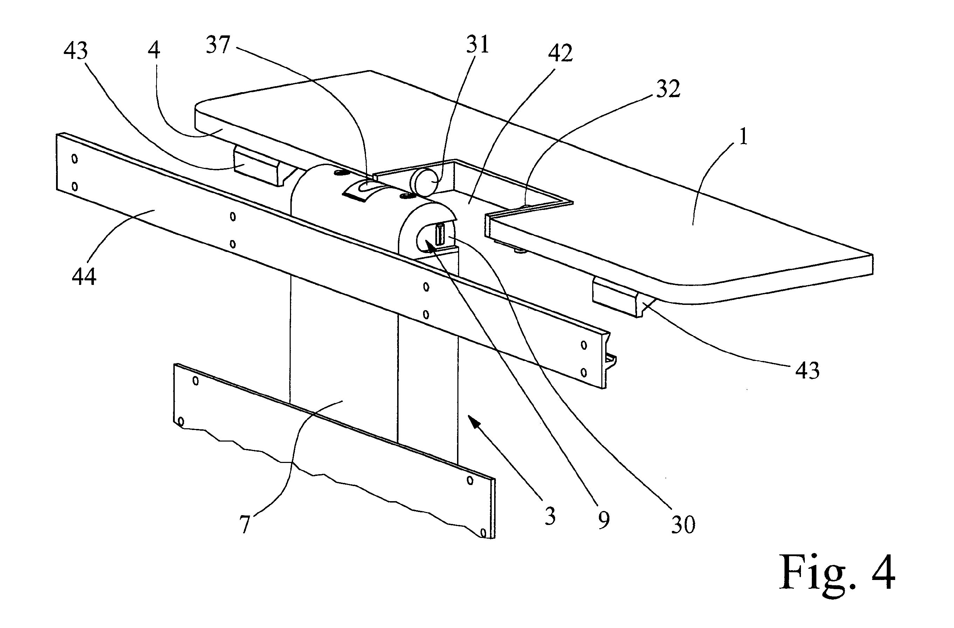

Ein weiterer Vorteil einer dreiteiligen Ausgestaltung besteht darin, daß das Verbindungsrohr 40 eine besonders einfache Struktur aufweist. Vorzugsweise wird das Verbindungsrohr 40 aus einem Aluminium-Strangpreßprofil gefertigt. Hierdurch läßt sich die Länge des Verbindungsrohrs 40 und damit des Schwenkhebels 7 auf einfache Weise variieren. Für eine möglichst kompakte Verbindung zwischen Tischplatte 1 und Montageeinheit 3 ist in der Tischplatte 1 eine Ausnehmung 42 vorgesehen, an deren gegenüberliegenden Kanten die dem zweiten Schwenklager 9 zugeordneten Zapfen 31, 32 der Tischplatte 1 angeordnet sind (Fig. 4). Bei montierter Tischplatte 1 umschließt somit die Tischplatte 1 das Gehäuse 16, vorzugsweise das Tischaufnahmegehäuse 41 der Montageeinheit 3 zumindest teilweise. Dies läßt sich den Fig. 1 und 2 entnehmen.

Um die Schwenkbewegung der Tischplatte 1 relativ zum Schwenkhebel 7 zu gewährleisten, ist weiter in bevorzugter Ausgestaltung der in Fig. 3 dargestellte obere Teil des Tischaufnahmegehäuses 41 koaxial zur zweiten Schwenkachse 11 teilweise zylinderförmig ausgestaltet.

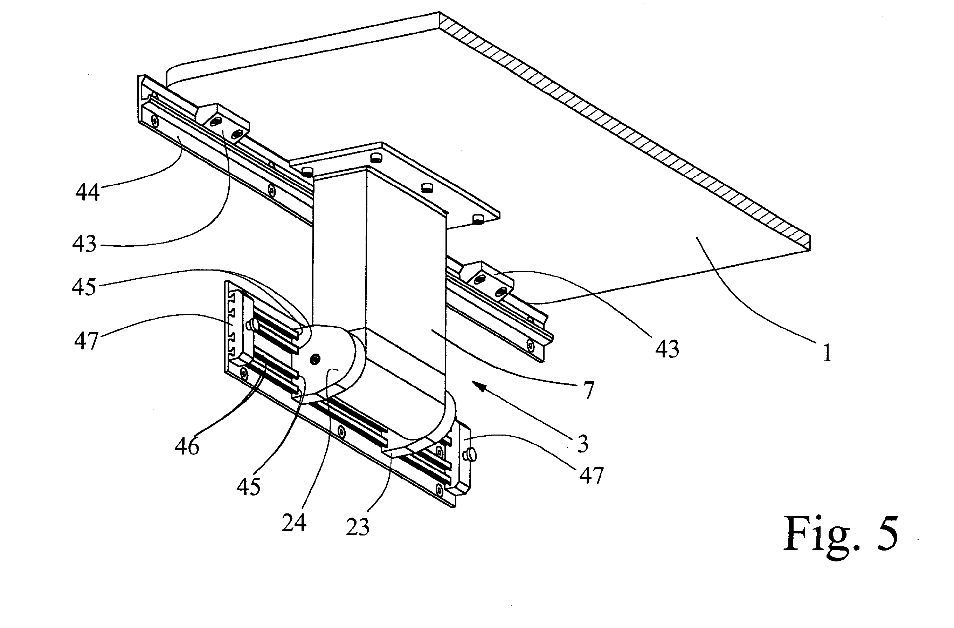

Es sind zahlreiche Möglichkeiten denkbar, den höhenverstellbaren Tisch in seinen unterschiedlichen Gebrauchsstellungen zu fixieren. Eine besonders bevorzugte Möglichkeit ist in Fig. 5 dargestellt. Hier sind an der Tischplatte 1 zwei Eingriffselemente in Form von Sicherungshaken 43 vorgesehen, die in eine am Trägerbauteil 5 angeordnete Lagerschiene 44 einhängbar sind. Je nach Ausgestaltung können auch nur ein Eingriffselement oder aber mehr als zwei Eingriffselemente vorgesehen werden. Die Sicherungshaken 43 werden bei in oberer Gebrauchsstellung befindlicher Montageeinheit 3 von einer leicht angehobenen Stellung der Tischkante 4 ausgehend durch ein Absenken der Tischkante 4 - durch Verschwenken der Tischplatte 1 um die zweite Schwenkachse 11 - eingehängt. Bei eingehängten Sicherungshaken 43 ist ein Verschwenken des Schwenkhebels 7 nicht mehr möglich. Diese Position kann durch das Aufstellen des Tischbeins 6 fixiert werden.

Zur weiteren Erhöhung der Flexibilität des höhenverstellbaren Tischs kann vorgesehen sein, daß die Montageeinheit 3 im montierten Zustand seitlich am Trägerbauteil 5, im wesentlich parallel zur ersten Schwenkachse 10 verstellbar ist. Hierfür weisen die Lagerkonsolen 23, 24 schwalbenschwanzförmige Führungsnuten 45 auf, die in Eingriff mit korrespondierenden, am Trägerbauteil 5 angeordneten schwalbenschwanzförmigen Führungsstegen 46 bringbar sind. Die Führungsstege 46 sind endseitig in bevorzugter Ausgestaltung durch Anschläge 47 begrenzt, die durch Lösen eines Schnellverschlusses entfernbar sind. So ist es auf einfache Weise möglich, die Montageeinheit 3 vom Trägerbauteil 5 zu lösen.

In bevorzugter Ausgestaltung ist das Trägerbauteil 5 als Tragwand, vorzugsweise als Seitenwand eines Wohnwagens oder Wohnmobils und die Montageeinheit 3 als Wandmontageeinheit ausgebildet.

In anderer Ausgestaltung läßt sich das Trägerbauteil 5 aber auch als freistehende Säule realisieren. In weiterer Ausgestaltung ist es auch denkbar, zwei unmittelbar aneinander anschließende Säulen mit jeweils einer Montageeinheit 3 vorzusehen, so daß zwei gegenüberliegende, in Ansatz bringbare Tischplatten 1 jeweils höhenverstellbar nutzbar sind.

Nach einer weiteren Lehre wird eine Montageeinheit 3 als solche wie oben beschrieben beansprucht. Auf die voranstehenden Ausführungen darf verwiesen werden.

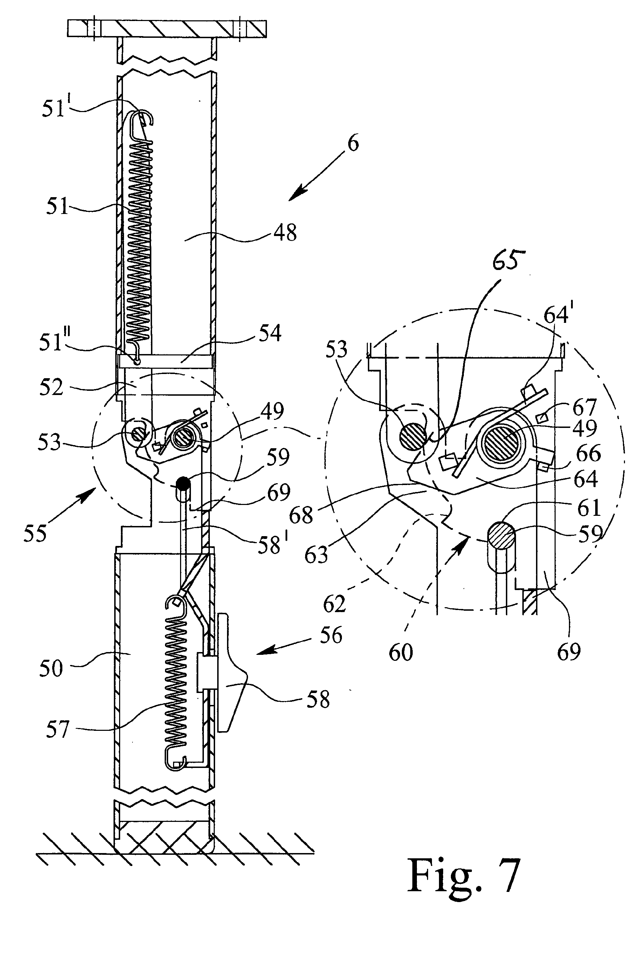

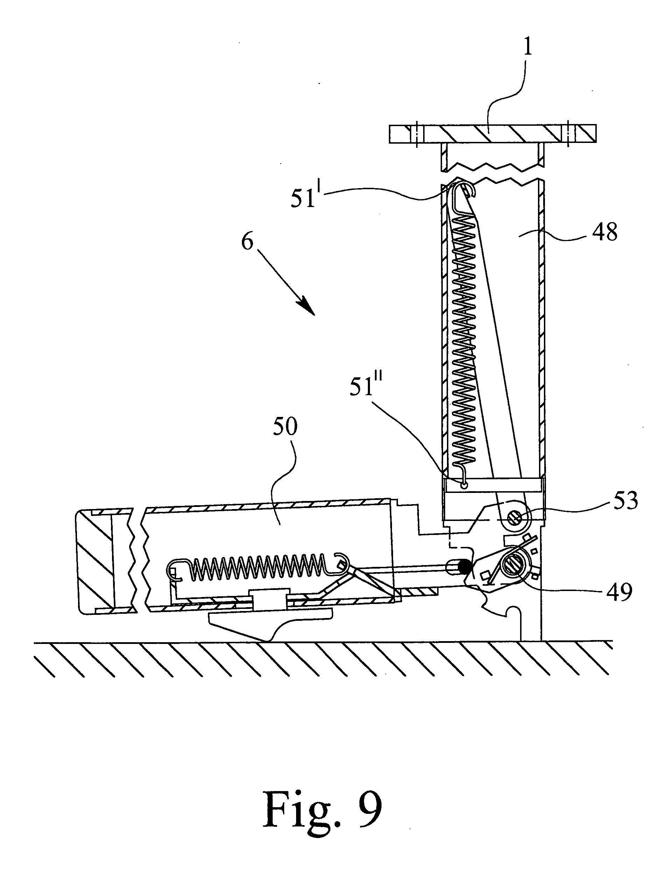

Es wurde bereits erläutert, daß das höhenverstellbare Tischbein 6 im dargestellten und insoweit bevorzugten Ausführungsbeispiel als umklappbares Tischbein 6 ausgestaltet ist. Eine für den Benutzer besonders komfortable und daher besonders bevorzugte Ausgestaltung eines derart höhenverstellbaren Tischbeins 6 zeigen die Fig. 7 bis 10. Diese ist unabhängig von der Ausgestaltung der Montageeinheit 3. Das höhenverstellbare Tischbein 6 weist einen ersten Beinabschnitt 48 und einen zweiten, mit dem ersten Beinabschnitt 48 um eine Schwenkachse 49 schwenkbar gekoppelten Beinabschnitt 50 auf. Der erste Beinabschnitt 48 ist an der Tischplatte 1 befestigt. Durch die Schwenkachse 49 ist das höhenverstellbare Tischbein 6 in einen eingeklappten Zustand (Fig. 9) sowie in einen ausgeklappten Zustand (Fig. 7) verstellbar.

Wesentlich ist nun die Tatsache, daß das Tischbein 6 einen mit beiden Beinabschnitten 48, 50 gekoppelten Kraftspeicher 51 aufweist, durch den die Verstellung des Tischbeins 6 in den vollständig ausgeklappten Zustand bewirkbar ist. Damit wird erreicht, daß sich das Tischbein 6 bei einer Verstellung des Tischs von der unteren in die obere Gebrauchsstellung selbsttätig in den ausgeklappten Zustand verstellt. Damit reduziert sich der Aufwand für die Verstellung des Tischs von der unteren Gebrauchsstellung in die obere Gebrauchsstellung auf die bereits beschriebene Verstellung der Tischplatte 1, wobei der zweite Beinabschnitt 50 in einer ersten Verstellphase über den Boden rutscht und sich das Tischbein 6 anschließend selbständig in den ausgeklappten Zustand verstellt.

Je nach Anwendungsfall kann es vorteilhaft sein, daß der Kraftspeicher 51 die gesamte Verstellbewegung des Tischbeins 6 vom eingeklappten Zustand in den ausgeklappten Zustand bewirkt. Es kann aber auch vorgesehen werden, daß die obige Verstellung des Tischbeins 6 zunächst hauptsächlich durch die Schwerkraft erfolgt und erst zum Ende der Verstellbewegung durch den Kraftspeicher 51 unterstützt wird, um sicherzustellen, daß der vollständig ausgeklappte Zustand des Tischbeins 6 erreicht wird.

Ein wesentlicher Vorteil des oben genannten höhenverstellbaren Tischbeins 6 besteht darin, daß der Benutzer nicht mehr für das Ausklappen des Tischbeins 6 sorgen muß. Dies erfolgt wie beschrieben selbsttätig.

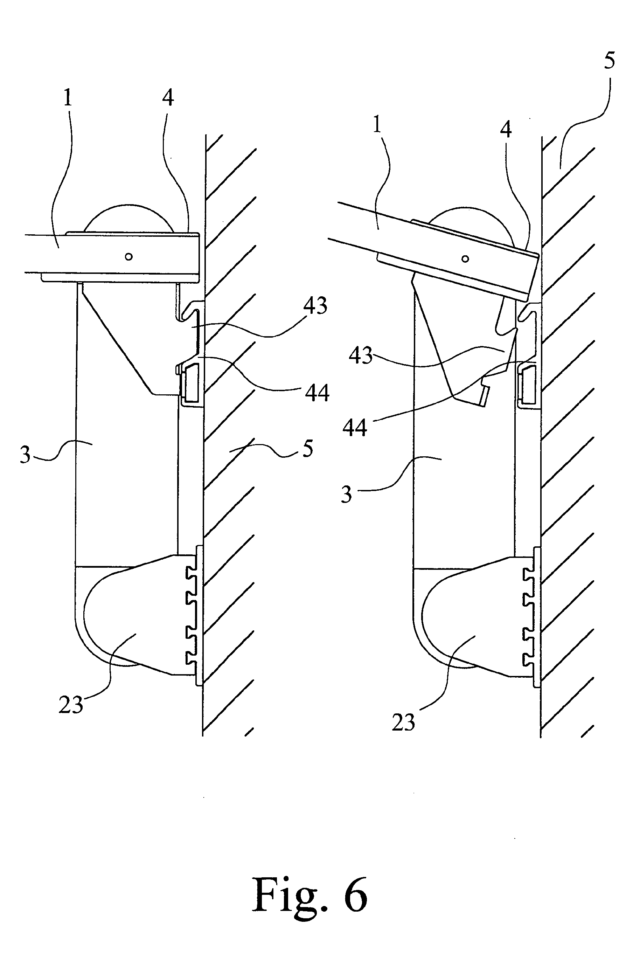

Besondere Vorzüge bringt das oben genannte höhenverstellbare Tischbein 6 bei der Ausgestaltung des Tischs gemäß Fig. 6 mit sich. Hier ist es ähnlich wie in Fig. 5 vorgesehen, daß die Tischplatte 1 zwei Eingriffselemente in Form von Sicherungshaken 43 aufweist, die in eine am Trägerbauteil 5 angeordnete Lagerschiene 44 einhängbar sind. Während bei der Ausgestaltung gemäß Fig. 5 für das Einhängen der Sicherungshaken 43 in die Lagerschiene 44 zunächst ein Anheben der Tischkante 4 und ein anschließendes Absenken der Tischkante 4 erforderlich ist, ist für die in Fig. 6 dargestellte Ausgestaltung die umgekehrte Vorgehensweise vorgesehen. Hier ist die Tischkante 4 mit den daran angeordneten Sicherungshaken 43 zunächst abzusenken und dann zum Einhängen entsprechend anzuheben. Der Benutzer steuert dies durch entsprechendes Anheben bzw. Absenken der Tischkante 13.

Aus der Darstellung gemäß Fig. 6 wird deutlich, daß der selbsttätigen Verstellung des Tischbeins 6 für die dort gezeigte Konstruktion besondere Bedeutung zukommt. Fehlt nämlich das Tischbein 6 nach dem oben beschriebenen Einhängen der Sicherungshaken 43 oder wird die Höhe des Tischbeins 6 nicht auf die obere Gebrauchsstellung eingestellt, so wird das gesamte Gewicht der Tischplatte 1 bzw. das dadurch entstehende Drehmoment von der Verbindung zwischen den Sicherungshaken 43 und der Lagerschiene 44 gehalten. Wird also bei einem manuell zu verstellenden Tischbein 6 beispielsweise vergessen, die Höhe des Tischbeins 6 auf die obere Gebrauchsstellung anzupassen, so ist mit einer Beschädigung der Wand- und/oder der Tischbeschläge zu rechnen. Aus diesem Grund ist das oben beschriebene, selbsttätig ausklappende Tischbein 6 vorteilhaft.

Durch die längliche Ausdehnung des Tischbeins 6 ist es besonders vorteilhaft, wenn der Kraftspeicher 51 als linear erstreckter Kraftspeicher ausgestaltet ist. Hierfür ist in bevorzugter Ausgestaltung ein Federkraftspeicher 51 vorgesehen. Der Federkraftspeicher 51 bewirkt dann das Drehmoment bezüglich der Schwenkachse 49 zur Unterstützung der Verstellung des Tischbeins 6 in den ausgeklappten Zustand. Der Kraftspeicher 51 wird vorzugsweise bei der Verstellung des Tischbeins 6 vom ausgeklappten Zustand in den eingeklappten Zustand gespannt, so daß die resultierende Rückstellkraft die selbsttätige Verstellung des Tischbeins 6 vom eingeklappten Zustand in den ausgeklappten Zustand bewirken kann.

Im dargestellten und insoweit bevorzugten Ausführungsbeispiel ist der Federkraftspeicher 51 als Zugfeder ausgestaltet, die an ihrem einen Ende 51' über einen Übertragungshebel 52 und über die Schwenkachse 53 mit dem zweiten Beinabschnitt 50 gekoppelt ist. Der Übertragungshebel 52 ragt weit in den hohl ausgebildeten ersten Beinabschnitt 48 hinein und bildet gewissermaßen eine Umlenkung der durch die Zugfeder 51 erzeugte Rückstellkraft. Dies ist insofern besonders vorteilhaft, als die gesamte Länge des ersten Beinabschnitts 48 genutzt werden kann, um die Zugfeder 51 aufzunehmen. Dies führt zu einem hohen Freiheitsgrad bei der Auslegung der Zugfeder 51 bzw. des Kraftspeichers 51.

An ihrem anderen Ende 51" ist die Zugfeder 51 an einer Querstrebe 54 im ersten Beinabschnitt 48 aufgehangen. Die Querstrebe 54 ist lediglich in den hohlen ersten Beinabschnitt 48 eingelegt, was zu einer besonders einfachen Montage führt.

Fig. 9 zeigt das im eingeklappten Zustand befindliche Tischbein 6, was der unteren Gebrauchsstellung des Tischs entspricht. Hier wird deutlich, daß der Kraftspeicher 51 noch kein auf die Verstellung des Tischbeins 6 in den ausgeklappten Zustand gerichtetes Drehmoment erzeugt. Dies liegt daran, daß die durch den Aufhängpunkt 51' und die Schwenkachse 53 verlaufende Kraftwirkungslinie in Fig. 9 rechts von der Schwenkachse 49 verläuft. Die Verstellbewegung des Tischbeins 6 in den ausgeklappten Zustand wird bei einem Anheben der Tischplatte 1 hier zunächst durch die Schwerkraft bewirkt.

Es darf darauf hingewiesen werden, daß der Kraftspeicher 51 nicht notwendigerweise im ersten Beinabschnitt 48 angeordnet sein muß. Denkbar ist auch, daß sich der Kraftspeicher 51 im zweiten Beinabschnitt 50 befindet.

Um das Tischbein 6 insbesondere im ausgeklappten Zustand stets in einer definierten Stellung halten zu können, ist eine Blockieranordnung 55 vorgesehen, die bei vollständig ausgeklapptem Tischbein 6 in einen ersten blockierenden Zustand bringbar ist und das Tischbein 6 dann im ausgeklappten Zustand blockiert. Dies ist in Fig. 7 dargestellt. In diesem ersten blockierenden Zustand läßt sich der zweite Beinabschnitt 50 in keine der beiden möglichen Schwenkrichtungen bewegen. Dies gewährleistet eine besonders stabile Anordnung, wenn der Tisch in der oberen Gebrauchsstellung bei im ausgeklappten Zustand befindlichem Tischbein 6 steht.

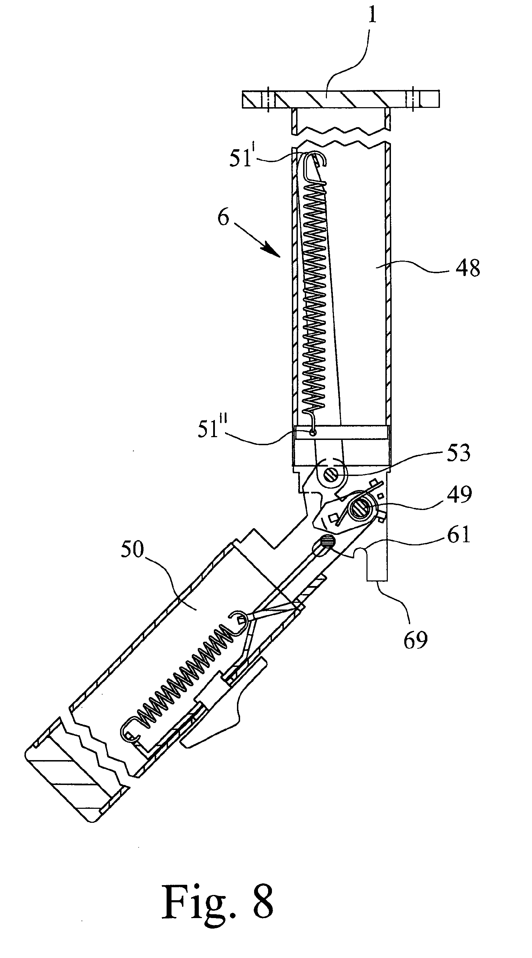

Die Blockieranordnung 55 ist ferner in einen zweiten blockierenden Zustand bringbar, wenn sich das Tischbein 6 im nur teilweise ausgeklappten Zustand befindet. Dies ist in Fig. 8 dargestellt. Hier ist es so, daß das Tischbein 6 hinsichtlich der Verstellung des Tischbeins 6 in Richtung des vollständig ausgeklappten Zustands in einer bestimmten Winkelstellung zwischen den beiden Beinabschnitten 48, 50 blockiert wird. Diese Stellung wird im folgenden Blockierstellung genannt und entspricht etwa der um 45° verschwenkten Stellung des zweiten Beinabschnitts 50. Schließlich ist die Blockieranordnung 55 in einen weiteren, nicht blockierenden Zustand bringbar.

In bevorzugter Ausgestaltung ist eine Betätigungsanordnung 56 vorgesehen, deren manuelle Betätigung die Verstellung der Blockieranordnung 55 in ihren nicht blockierenden Zustand bewirkt. In bevorzugter Ausgestaltung ist die Betätigungsanordnung 56 in ihre nicht betätigte Stellung vorgespannt. Im dargestellten Ausführungsbeispiel ist für die Realisierung dieser Vorspannung eine Zugfeder 57 vorgesehen. In weiterer bevorzugter Ausgestaltung weist die Betätigungsanordnung 56 einen an einer Außenseite des Tischbeins 6 angeordneten Schieber 58 auf, der zur Betätigung in Fig. 7 nach unten verschiebbar ist.

Mit der oben beschriebenen Betätigungsanordnung 56 ist es möglich, die im ersten blockierenden Zustand befindliche Blockieranordnung 55 in den nicht blockierenden Zustand zu verstellen, so daß der zweite Beinabschnitt 50 aus der in Fig. 7 dargestellten Stellung heraus für die Verstellung des Tischs von der oberen in die untere Gebrauchsstellung manuell in der Zeichnung rechtsherum zumindest um einen geringen Betrag verschwenkt werden kann. Vorteilhaft ist dabei die Tatsache, daß die um etwa 45° verschwenkte Stellung des zweiten Beinabschnitts 50 durch die Blockieranordnung 55 - zweiter blockierender Zustand - gehalten werden kann. Dies ist deshalb vorteilhaft, da während der weiteren Abwärtsbewegung der Tischplatte 1 der zweite Beinabschnitt 50 auf den Boden aufsetzt, über den Boden rutscht und dabei weiter eingeschwenkt wird, bis er schließlich in noch zu beschreibender Weise in der unteren Gebrauchsstellung eine um etwa 90° abgewinkelte Lage erreicht (Fig. 9). Der Benutzer braucht den zweiten Beinabschnitt 50 also nur in die 45°-Stellung zu verstellen, wo der zweite Beinabschnitt 50 dann von der Blockieranordnung 55 gehalten wird.

Es gibt eine Reihe von Möglichkeiten, wie die Blockieranordnung 55 bei der Verstellung des Tischs in die untere Gebrauchsstellung in den zweiten blokkierenden Zustand überführt werden kann. Beispielsweise ist es in bevorzugter Ausgestaltung vorgesehen, daß der Benutzer den Schieber 58 erst dann löst, wenn der zweite Beinabschnitt 50 weiter als 45° verschwenkt ist. Es kann aber auch vorgesehen werden, daß eine Verstellung des Tischbeins 6 in Richtung des eingeklappten Zustands nach dem Verlassen des in Fig. 7 dargestellten ausgeklappten Zustands das selbsttätige Einfallen der Blockieranordnung 55 in den zweiten blockierenden Zustand bewirkt. Dann ist der Schieber 48 nur kurz zu betätigen und kann, nachdem der zweite Beinabschnitt 50 um einen geringen Betrag verschwenkt wurde, gelöst werden. Dies führt zu einer weiteren Steigerung des Bedienkomforts.

Es kann auch vorteilhaft sein, daß eine Verstellung des Tischbeins 6, insbesondere die oben beschriebene selbsttätige Verstellung des Tischbeins 6 in den ausgeklappten Zustand das selbsttätige Einfallen der Blockieranordnung 55 in den ersten blockierenden Zustand bewirkt. Dann endet die selbsttätige Verstellung des Tischbeins 6 nämlich mit einem definierten und in beiden Schwenkrichtungen des zweiten Beinabschnitts 50 blockierenden Zustand.

Der oben beschriebene zweite blockierende Zustand der Blockieranordnung 55 ist nur für die Verstellung des Tischs vom oberen in den unteren Gebrauchszustand, also für die Verstellbewegung des Tischbeins 6 vom ausgeklappten Zustand in den eingeklappten Zustand, vorgesehen. Andernfalls würde bei der Verstellung des Tischbeins 6 vom eingeklappten Zustand in den ausgeklappten Zustand die gewünschte selbsttätige Verstellbewegung durch die obige Blockierung unterbrochen. Daher ist in es in bevorzugter Ausgestaltung vorgesehen, daß das Tischbein 6 aus dem eingeklappten Zustand heraus in den ausgeklappten Zustand verstellbar ist, ohne daß die Blockieranordnung 55 in den zweiten blockierenden Zustand einfällt.

Im in den Fig. 7 bis 10 dargestellten und insoweit bevorzugten Ausführungsbeispiel weist die Blockieranordnung 55 ein Blockierelement 59 und eine Steuerkurve 60 auf, wobei das Blockierelement 59 an einem der beiden Beinabschnitte 48, 50 und die Steuerkurve 60 am entsprechend anderen Beinabschnitt 48, 50 angeordnet ist. Vorliegend ist das Blockierelement 59 am zweiten Beinabschnitt 50 und die Steuerkurve 60 am ersten Beinabschnitt 48 angeordnet.

Das Blockierelement 59 ist vorliegend über eine Koppelstange 58' mit dem Schieber 58 gekoppelt und damit über die Feder 57 vorgespannt. Das Blokkierelement 59 läuft bei der Verstellung des Tischbeins 6 an der Steuerfläche 60 entlang. Bei im ersten blockierenden Zustand befindlicher Blockieranordnung (Fig. 7) steht das Blockierelement 59 mit der Steuerkurve 60, insbesondere mit einer Ausformung 61 der Steuerkurve 60, in blockierendem Eingriff. Bei im zweiten blockierenden Zustand befindlicher Blockieranordnung 55 (Fig. 8) bewirkt eine Verstellung des Tischbeins 6 in Richtung des vollständig ausgeklappten Zustands den blockierenden Eingriff zwischen dem Blockierelement 59 und einer Anschlagfläche 62 der Steuerkurve 60 in der Blockierstellung.

Eine besonders einfache konstruktive Realisierung ergibt sich dann, wenn das Blockierelement 59 als Zapfen ausgestaltet ist, der, wie oben beschrieben, mit der Steuerkurve 60 in Eingriff bringbar ist.

Fig. 7 läßt sich entnehmen, daß die Steuerkurve 60 einen derartigen Freilauf 63 aufweist, daß bei im zweiten blockierenden Zustand befindlicher Blockieranordnung 55 (Fig. 8) eine Verstellung des Tischbeins 6 zwischen dem eingeklappten Zustand und der Blockierstellung ohne blockierenden Eingriff zwischen Blockierelement 59 und Steuerkurve 60 möglich ist. Die Funktion des in diesem Freilauf 63 angeordneten Mitnehmers 64 wird im folgenden erläutert.

Besondere Bedeutung kommt wie oben erläutert einer bevorzugten konstruktiven Maßnahme zu, die gewährleistet, daß die Blockieranordnung 55 bei der Verstellung des Tischbeins 6 aus dem eingeklappten Zustand heraus in Richtung des ausgeklappten Zustands nicht in den zweiten blockierenden Zustand gemäß Fig. 8 fällt. Hierfür weist die Blockieranordnung 55 zunächst den obigen Mitnehmer 64 mit einer Anlaufschräge 65 auf, der vorliegend als zwischen zwei Anschlägen 66, 67 verschwenkbare Wippe ausgestaltet ist. In bevorzugter Ausgestaltung ist der Mitnehmer 64 gegen den Anschlag 66 mittels einer Schenkelfeder 64' vorgespannt.

Beim Anheben der Tischplatte 1 aus der unteren Gebrauchsstellung (Fig. 9) wird der zweite Beinabschnitt 50 wie erläutert zunächst durch die Schwerkraft in der Zeichnung linksherum verschwenkt. Dieses Verschwenken wird wie oben erläutert im Laufe der weiteren Verstellung zunehmend durch den Kraftspeicher 51 unterstützt.

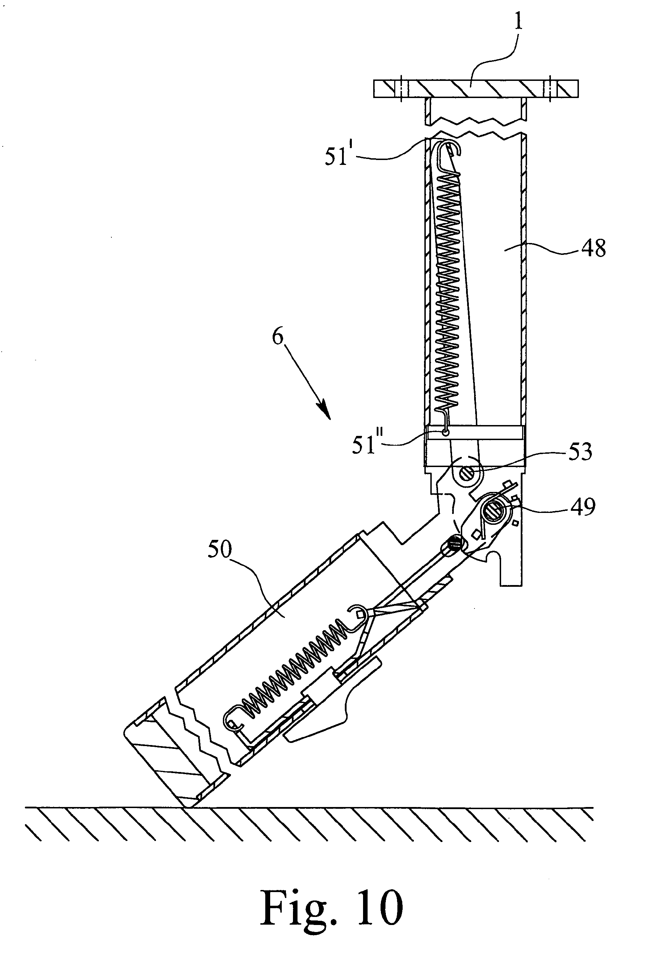

Bei der Verstellung des Tischbeins 6 aus dem in Fig. 9 dargestellten eingeklappten Zustand heraus in Richtung des in Fig. 7 dargestellten ausgeklappten Zustands kommt das zapfenförmige Blockierelement 59 in Eingriff mit der Anlaufschräge 65 des Mitnehmers 64 und nimmt den Mitnehmer 64 mit. Bei weiterer Verstellung des Tischbeins 6 läuft der Mitnehmer 64 gegen den Anschlag 67 (Fig. 10) und wird entsprechend in dieser Stellung blockiert. Bei weiterer Verstellung des Tischbeins 6 läuft das Blockierelement 59 durch die Blockierung des Mitnehmers 64 gegen die Vorspannung durch die Feder 57 auf die Anlaufschräge 65 des Mitnehmers 64 und wird im Ergebnis an der Anschlagfläche 62 der Steuerkurve 60 vorbeigeführt. Es ist also so, daß der Mitnehmer 64 verhindert, daß das Blockierelement 59 bei der Verstellung des Tischbeins 6 vom eingeklappten Zustand in den ausgeklappten Zustand gegen die Anschlagfläche 62 der Steuerkurve 60 läuft und das Tischbein 6 in der oben genannten Blockierstellung blockiert wird.

Wesentlich ist noch die Tatsache, daß der Mitnehmer 64 derart ausgestaltet ist, daß er die Verstellung des Tischbeins 6 vom ausgeklappten Zustand in den eingeklappten Zustand nicht behindert. Hierfür weist der Mitnehmer 64 eine weitere Anlaufschräge 68 auf. Bei einer derartigen Verstellung des Tischbeins 6 betätigt der Benutzer also, wie oben beschrieben, den Schieber 58 und verschwenkt den zweiten Beinabschnitt 50 so weit, bis die Blockieranordnung 55 in den zweiten blockierenden Zustand fällt (Fig. 8). Beim Absenken der Tischplatte 1 wird der zweite Beinabschnitt 50 weiter in der Zeichnung rechtsherum verschwenkt, so daß das zapfenförmige Blockierelement 59 in Anlage an der weiteren Anlaufschräge 68 des Mitnehmers 64 kommt. Der Mitnehmer 64 befindet sich durch seine Vorspannung bereits in Anlage am Anschlag 66, so daß das Blockierelement 59 gegen die Vorspannung durch die Feder 57 auf die weitere Anlaufschräge 68 des Mitnehmers 64 läuft. Bei weiterer Verstellung des Tischbeins 6 läuft das Blockierelement 59 über die weitere Kontur des Mitnehmers 64 hin zur Anlaufschräge 65 des Mitnehmers 64, bis der in Fig. 9 dargestellte eingeklappte Zustand des Tischbeins 6 erreicht ist. Es läßt sich feststellen, daß in der oben dargestellten bevorzugten Ausgestaltung mit dem Mitnehmer 64 eine Behinderung der Verstellung des Tischbeins 6 vom ausgeklappten Zustand in den eingeklappten Zustand nicht zu verzeichnen ist.

Zu einer besonders kompakten Realisierung des Tischbeins 6 führt die hohle Ausgestaltung der Beinabschnitte 48, 50 wobei dann vorzugsweise Teile der Blockieranordnung 55 und/oder des Federspeichers 51 in den Hohlräumen der Beinabschnitte 48, 50 angeordnet sind.

Es darf schließlich darauf hingewiesen werden, daß im dargestellten und insoweit bevorzugten Ausführungsbeispiel der erste Beinabschnitt 48 eine Ausformung 69 derart aufweist, daß bei im eingeklappten Zustand befindlichem Tischbein 6 die Ausformung 69 die Auflagefläche des Tischbeins 6 auf der Bodenfläche bereitstellt.

Nach einer weiteren eigenständige Lehre wird das oben beschriebene höhenverstellbare Tischbein 6 als solches wie oben beschrieben beansprucht. Auf die voranstehenden Ausführungen darf verwiesen werden.

## Patentansprüche

1. Höhenverstellbarer Tisch mit einer im wesentlichen waagerechten Tischplatte (1), mit einer Montageeinheit (3) zur höhenverstellbaren Fixierung einer der Tischkanten (4) an einem Trägerbauteil (5) und mit mindestens einem höhenverstellbaren Tischbein (6), wobei der Tisch in mehr als einer Gebrauchsstellung, zumindest jedoch in einer oberen und einer unteren Gebrauchsstellung, fixierbar ist,
**dadurch gekennzeichnet,**
**daß** die Montageeinheit (3) einen Schwenkhebel (7) sowie ein erstes Schwenklager (8) und ein zweites Schwenklager (9) aufweist, daß dem ersten Schwenklager (8) eine erste Schwenkachse (10) und dem zweiten Schwenklager (9) eine zweite Schwenkachse (11) zugeordnet ist, daß im montierten Zustand der Montageeinheit (3) der Schwenkhebel (7) über das erste Schwenklager (8) mit dem Trägerbauteil (5) und über das zweite Schwenklager (9) mit der Tischplatte (1) schwenkbar verbunden ist, daß die den beiden Schwenklagern (8, 9) zugeordneten Schwenkachsen (10, 11) zueinander im wesentlichen parallel angeordnet und durch einen Schwenkradius voneinander beabstandet sind, daß die Verstellung des Tischs zwischen seiner oberen und seiner unteren Gebrauchsstellung mit einer Schwenkbewegung des Schwenkhebels (7) verbunden ist, daß die Montageeinheit (3) einen mit dem Schwenkhebel (7) einerseits und dem Trägerbauteil (5) andererseits gekoppelten Kraftspeicher (12) aufweist und daß der Kraftspeicher (12) so angeordnet und ausgebildet ist, daß er über im wesentlichen den gesamten Schwenkbereich des Schwenkhebels (7) ein auf den Schwenkhebel (7) gegen ein Absenken des Tischs wirkendes Drehmoment erzeugt.

2. Höhenverstellbarer Tisch nach Anspruch 1, **dadurch gekennzeichnet, daß** die Kopplung des Kraftspeichers (12) mit dem Schwenkhebel (7) einerseits und mit dem Trägerbauteil (5) andererseits derart mit der Kennlinie des Kraftspeichers (12) abgestimmt ist, daß das dem Absenken des Tischs entgegenwirkende Drehmoment über im wesentlichen den gesamten Schwenkbereich des Schwenkhebels (7) bei Einwirkung vorzugsweise etwa der halben Gewichtskraft der Tischplatte (1) auf den Schwenkhebel (7) - wenn die Tischplatte (1) an ihrer der Montageeinheit (3) gegenüberliegenden Tischkante (13) von Hand im wesentlichen waagerecht gehalten wird - einen Gleichgewichtszustand bewirkt.

3. Höhenverstellbarer Tisch nach Anspruch 1 oder 2, **dadurch gekennzeichnet, daß** der Kraftspeicher (12) als linear erstreckter Kraftspeicher, vorzugsweise als Federkraftspeicher mit vorzugsweise wenigstens zwei in Richtung der ersten Schwenkachse (10) gesehen nebeneinander angeordneten Schraubenfedern (14, 15) ausgestaltet ist,
vorzugsweise, daß der Kraftspeicher (12) derart angeordnet und ausgestaltet ist, daß er beim Absenken des Tischs auf Zug belastet wird.

4. Höhenverstellbarer Tisch nach Anspruch 3, **dadurch gekennzeichnet, daß** die Kraftwirkungslinie der Kraftwirkung des Kraftspeichers (12) zwischen Trägerbauteil (5) und Schwenkhebel (7) im wesentlichen über den gesamten Schwenkbereich des Schwenkhebels (7) oberhalb der ersten Schwenkachse (10) verläuft,
und oder, daß die Kraftwirkungslinie der Kraftwirkung des Kraftspeichers (12) zwischen Trägerbauteil (5) und Schwenkhebel (7) in der oberen Gebrauchsstellung und vorzugsweise auch in der unteren Gebrauchsstellung des Tischs zum Trägerbauteil (5) hin seitlich der Schwenkachse (10) verläuft.

5. Höhenverstellbarer Tisch nach Anspruch 3 oder 4, **dadurch gekennzeichnet, daß** der Kraftspeicher (12) mit dem Trägerbauteil (5) im montierten Zustand an einem Angriffspunkt oberhalb der Schwenkachse (10) und vorzugsweise zum Trägerbauteil (5) hin seitlich der Schwenkachse (10) gekoppelt ist.

6. Höhenverstellbarer Tisch nach einem der Ansprüche 1 bis 5, **dadurch gekennzeichnet, daß** die Montageeinheit (3) ein Gehäuse (16) aufweist und daß das Gehäuse (16) im wesentlichen alle mechanischen Komponenten der Montageeinheit (3), insbesondere den Kraftspeicher (12), vollständig umschließt,
vorzugsweise, daß das erste Schwenklager (8) durch zwei Lagerbohrungen (17, 18) in gegenüberliegenden Wandungen (19, 20) des Gehäuses (16) der Montageeinheit (3) und durch zwei korrespondierende, vorzugsweise unbewegliche, im montierten Zustand der Montageeinheit mit dem Trägerbauteil (5) verbundene Zapfen (21, 22) gebildet ist und daß die Zapfen (21, 22) beim Verschwenken des Schwenkhebels (7) in den Lagerbohrungen (17, 18) laufen, weiter vorzugsweise, daß der Kraftspeicher (12) mit dem Trägerbauteil (5) über eine im wesentlichen über die Breite des Schwenkhebels (7) verlaufende, exzentrisch zu und vorzugsweise an den Stirnflächen der beiden Zapfen (21, 22) befestigte, zwischen den beiden Zapfen (21, 22) angeordnete Querstrebe - Federhaltestange (25) - gekoppelt ist,
und/oder, daß die beiden Zapfen (21, 22) stirnseitig über ein Verdrehsicherungsprofil (26) mit hoher Torsionssteifigkeit miteinander verbunden sind.

7. Höhenverstellbarer Tisch nach einem der vorhergehenden Ansprüche, **dadurch gekennzeichnet, daß** der Kraftspeicher (12) mit dem Schwenkhebel (7) über eine einstellbare Aufhängung (27, 28) gekoppelt ist, daß die einstellbare Aufhängung (27, 28) vorzugsweise von außen einstellbar ist und daß mittels der einstellbaren Aufhängung (27, 28) die Vorspannung des Kraftspeichers (12) einstellbar ist.

8. Höhenverstellbarer Tisch nach einem der vorhergehenden Ansprüche, **dadurch gekennzeichnet, daß** das zweite Schwenklager (9) bei montierter Tischplatte (1) durch seitliche kulissenartige Ausformungen (29, 30) an der Montageeinheit (3) und durch korrespondierende Zapfen (31, 32) in der Tischplatte (1) gebildet wird und daß die Zapfen (31, 32) bei montierter Tischplatte (1) in den kulissenartigen Ausformungen (29, 30) laufen.

9. Höhenverstellbarer Tisch nach einem der vorhergehenden Ansprüche, **dadurch gekennzeichnet, daß** die schwenkbare Verbindung zwischen Schwenkhebel (7) und Tischplatte (1) ohne die Anwendung zusätzlicher Hilfsmittel, insbesondere Werkzeug o. dgl., lösbar ist,
vorzugsweise, daß die Montageeinheit (3) eine Verriegelungseinrichtung (33) aufweist und daß die schwenkbare Verbindung zwischen Schwenkhebel (7) und Tischplatte (1) durch Betätigung der Verriegelungseinrichtung (33) lösbar ist,
weiter vorzugsweise, daß die Verriegelungseinrichtung (33) in der unbetätigten Stellung die Zapfen (31, 32) der Tischplatte (1) in den kulissenartigen Ausformungen (29, 30) hält und die Verriegelungseinrichtung (33) in der betätigten Stellung die Zapfen (31, 32) der Tischplatte (1) freigibt,
weiter vorzugsweise, daß die Verriegelungseinrichtung (33) in den kulissenartigen Ausformungen (29, 30) der Montageeinheit (3) Verrasthebel (34, 35) aufweist, daß die Verrasthebel (34, 35) in eine Sperr- und in eine Freigabestellung bringbar sind, daß sich die Verrasthebel (34, 35) bei unbetätigter Verriegelungseinrichtung (33) in der Sperrstellung und bei betätigter Verriegelungseinrichtung (33) in der Freigabestellung befinden,
und/oder, daß die Verriegelungseinrichtung (33) zur Betätigung einen von außen betätigbaren Entriegelungsknopf (37) aufweist, der derart an der Montageeinheit (3) angeordnet ist, daß er bei montierter Tischplatte (1) ausschließlich in einer vorbestimmten Gebrauchsstellung, vorzugsweise in der oberen Gebrauchsstellung betätigbar ist.

10. Höhenverstellbarer Tisch nach Anspruch 6 und ggf. nach einem der Ansprüche 7 bis 9, **dadurch gekennzeichnet, daß** das Gehäuse (16) der Montageeinheit (3) drei getrennte Teilgehäuse (39, 40, 41) aufweist, daß das erste Teilgehäuse - Lagergehäuse (39) - die Lagerbohrungen (17, 18) für das erste Schwenklager (8) aufweist, daß das zweite Teilgehäuse - Verbindungsrohr (40) - im wesentlichen den Schwenkhebel (7) bildet und daß das dritte Teilgehäuse - Tischaufriahmegehäuse (41) - die kulissenförmigen Ausformungen (29, 30) für das zweite Schwenklager (9) mit der Verriegelungseinrichtung (33) aufweist,
vorzugsweise, daß die drei Teilgehäuse (39, 40, 41) zur Montage ineinander und/oder aufeinander steckbar ausgestaltet sind,
weiter vorzugsweise, daß das Lagergehäuse (39) und das Tischaufnahmegehäuse (41) zur Montage in das Verbindungsrohr (40) einsteckbar ausgestaltet sind,
und/oder, daß die drei Teilgehäuse (39, 40, 41) bei montierter Montageeinheit (3) durch die Kraftwirkung des Kraftspeichers (12) zusammengehalten werden.

11. Höhenverstellbarer Tisch nach Anspruch 8 und ggf. Anspruch 9 oder 10,
**dadurch gekennzeichnet, daß** die Zapfen (31, 32) der Tischplatte (1) an den beiden gegenüberliegenden Rändern einer offenen rechteckförmigen Ausnehmung (42) der Tischplatte (1) angeordnet sind, daß die Tischplatte (1) im montierten Zustand einen Teilbereich der Montageeinheit (3) umschließt und daß dieser Teilbereich koaxial zur zweiten Schwenkachse (11) eine im wesentlichen zylinderförmige Oberfläche aufweist.

12. Höhenverstellbarer Tisch nach einem der vorhergehenden Ansprüche, **dadurch gekennzeichnet, daß** die Montageeinheit (3) und/oder die Tischplatte (1) mindestens ein Eingriffselement aufweist, das in mindestens einer Gebrauchsstellung, vorzugsweise in der oberen Gebrauchsstellung, in ein korrespondierendes, mit dem Trägerbauteil (5) verbundenes Gegenelement in Eingriff bringbar ist - Sperrzustand -, wobei dann ein Verschwenken des Schwenkhebels (7) nicht möglich ist,
vorzugsweise, daß das Angriffselement als an der Tischkante (4) angeordneter Sicherungshaken (43) und das Gegenelement als Lagerschiene (44) ausgestaltet sind, daß der Sicherungshaken (43) von einer leicht angehobenen Stellung der Tischkante (4) ausgehend durch ein Absenken der Tischkante (4) - durch Verschwenken der Tischplatte (1) um die zweite Schwenkachse (11) - in Eingriff mit der Lagerschiene (44) bringbar ist, wobei dieser Sperrzustand durch anschließendes Blockieren des Verschwenkens der Tischplatte (1), insbesondere durch das Aufstellen des Tischbeins (6) gehalten wird.

13. Höhenverstellbarer Tisch nach einem der vorhergehenden Ansprüche, **dadurch gekennzeichnet, daß** die Montageeinheit (3) im montierten Zustand derart mit dem Trägerbauteil (5) verbunden ist, daß die Montageeinheit (3) seitlich - im wesentlichen parallel zur ersten Schwenkachse (10) - verstellbar ist.

14. Höhenverstellbarer Tisch nach einem der vorhergehenden Ansprüche, **dadurch gekennzeichnet, daß** das Trägerbauteil (5) als Tragwand und die Montageeinheit (3) als Wandmontageeinheit ausgebildet ist.

15. Höhenverstellbarer Tisch nach dem Oberbegriff von Anspruch 1 und ggf. dem kennzeichnenden Teil eines oder mehrerer der vorhergehenden Ansprüche, **dadurch gekennzeichnet, daß** das höhenverstellbare Tischbein (6) als klappbares Tischbein (6) mit einem ersten, an der Tischplatte (1) befestigten Beinabschnitt (48) und einem zweiten, mit dem ersten Beinabschnitt (48) um eine Schwenkachse (49) schwenkbar gekoppelten Beinabschnitt (50) ausgestaltet ist und in einen eingeklappten sowie in einen ausgeklappten Zustand verstellbar ist, daß das Tischbein (6) einen mit beiden Beinabschnitten (48, 50) gekoppelten Kraftspeicher (51) aufweist und daß durch den Kraftspeicher (51) die Verstellung des Tischbeins (6) in den vollständig ausgeklappten Zustand bewirkbar ist,
vorzugsweise, daß der Kraftspeicher (51) als linear erstreckter Kraftspeicher (51), vorzugsweise als Federkraftspeicher (51), ausgestaltet ist.

16. Höhenverstellbarer Tisch nach Anspruch 15, **dadurch gekennzeichnet, daß** der Kraftspeicher (51) bei der Verstellung des Tischbeins (6) vom ausgeklappten Zustand in den eingeklappten Zustand geladen - gespannt - wird und daß durch die resultierende Rückstellkraft die Verstellung des Tischbeins (6) in den vollständig ausgeklappten Zustand bewirkbar ist.

17. Höhenverstellbarer Tisch nach Anspruch 15 oder 16, **dadurch gekennzeichnet, daß** eine Blockieranordnung (55) vorgesehen ist, daß die Blockieranordnung (55) bei vollständig ausgeklapptem Tischbein (6) in einen ersten blockierenden Zustand bringbar ist und das Tischbein (6) dann im ausgeklappten Zustand blockiert, daß die Blockieranordnung (55) bei nur teilweise ausgeklapptem Tischbein (6) in einen zweiten blockierenden Zustand bringbar ist und das Tischbein (6) dann hinsichtlich der Verstellung des Tischbeins (6) in Richtung des vollständig ausgeklappten Zustands in einer bestimmten Winkelstellung zwischen den beiden Beinabschnitten (48, 50) - Blockierstellung - blockiert, und daß die Blockiereinrichtung (55) in einen nicht blockierenden Zustand bringbar ist.

18. Höhenverstellbarer Tisch nach Anspruch 17, **dadurch gekennzeichnet, daß** eine Betätigungsanordnung (56) vorgesehen ist, daß die manuelle Betätigung der Betätigungsanordnung (56) die Verstellung der Blockieranordnung (55) in ihren nicht blockierenden Zustand bewirkt,
vorzugsweise, daß die Betätigungsanordnung (56) in ihre nicht betätigte Stellung vorgespannt ist,
und/oder, daß die Betätigungsanordnung (56) zur Betätigung einen an einer Außenseite des Tischbeins (6) angeordneten Schieber (58) aufweist.

19. Höhenverstellbarer Tisch nach Anspruch 17 und ggf. nach Anspruch 18,
**dadurch gekennzeichnet, daß** eine Verstellung des Tischbeins (6) in Richtung des eingeklappten Zustands nach dem Verlassen des ausgeklappten Zustands das selbsttätige Einfallen der Blockieranordnung (55) in den zweiten blockierenden Zustand bewirkt,
vorzugsweise, daß eine Verstellung des Tischbeins (6) in den ausgeklappten Zustand das selbsttätige Einfallen der Blockieranordnung (55) in den ersten blockierenden Zustand bewirkt.

20. Höhenverstellbarer Tisch nach einem der Ansprüche 17 bis 19, **dadurch gekennzeichnet, daß** das Tischbein (6) aus dem eingeklappten Zustand heraus in den ausgeklappten Zustand verstellbar ist, ohne daß die Blockieranordnung (55) in den zweiten blockierenden Zustand einfällt.

21. Höhenverstellbarer Tisch nach einem der Ansprüche 17 bis 20, **dadurch gekennzeichnet, daß** die Blockieranordnung (55) ein Blockierelement (59) und eine Steuerkurve (60) aufweist, daß das Blockierelement (59) an einem Beinabschnitt (48, 50) und die Steuerkurve (60) am entsprechend anderen Beinabschnitt (48, 50) angeordnet ist, daß das Blockierelement (59) bei der Verstellung des Tischbeins (6) an der Steuerfläche (60) entlangläuft, daß bei im ersten blockierenden Zustand befindlicher Blockieranordnung (55) das Blockierelement (59) mit der Steuerkurve (60) in blockierenden Eingriff steht, daß bei im zweiten blockierenden Zustand befindlicher Blockieranordnung (55) eine Verstellung des Tischbeins (6) in Richtung des vollständig ausgeklappten Zustands den blockierenden Eingriff zwischen dem Blockierelement (55) und einer Anschlagfläche (62) der Steuerkurve (60) bewirkt.

22. Höhenverstellbarer Tisch nach Anspruch 21, **dadurch gekennzeichnet, daß** das Blockierelement (59) als Zapfen o. dgl. ausgestaltet ist.

23. Höhenverstellbarer Tisch nach Anspruch 21 oder 22, **dadurch gekennzeichnet, daß** die Steuerkurve (60) einen derartigen Freilauf (63) aufweist, daß bei im zweiten blockierenden Zustand befindlicher Blockieranordnung (55) eine Verstellung des Tischbeins (6) zwischen dem eingeklappten Zustand und der Blockierstellung ohne blockierenden Eingriff zwischen Blockierelement (59) und Steuerkurve (60) möglich ist.

24. Höhenverstellbarer Tisch nach Anspruch 21 und ggf. nach Anspruch 22 oder 23, **dadurch gekennzeichnet, daß** die Blockieranordnung (55) einen vorzugsweise vorgespannten Mitnehmer (64) mit einer Anlaufschräge (65) aufweist, daß das Blockierelement (59) bei der Verstellung des Tischbeins (6) aus dem eingeklappten Zustand heraus in Richtung des ausgeklappten Zustands in Eingriff mit der Anlaufschräge (65) des Mitnehmers (64) kommt und den Mitnehmer (64) mitnimmt, daß bei weiterer Verstellung des Tischbeins (6) der Mitnehmer (64) gegen einen Anschlag (67) läuft, das Blockierelement (59) dadurch auf die Anlaufschräge (65) läuft und an der Anschlagfläche (62) der Steuerkurve (60) vorbeigeführt wird.

25. Höhenverstellbarer Tisch nach einem der Ansprüche 15 bis 24, **dadurch gekennzeichnet, daß** die Beinabschnitte (48, 50) des Tischbeins (6) im wesentlichen hohl ausgestaltet sind und Teile der Blockieranordnung (55) und/oder den Federspeicher (51) in ihrem Innern aufnehmen.

26. Montageeinheit für einen höhenverstellbaren Tisch nach dem Oberbegriff von Anspruch 1, wobei durch die Montageeinheit (3) eine Tischkante (4) höhenverstellbar an einem Trägerbauteil (5) fixierbar ist,
**gekennzeichnet durch**
die Merkmale der Montageeinheit (3) gemäß dem kennzeichnenden Teil eines oder mehrerer der Ansprüche 1 bis 14.

27. Höhenverstellbares Tischbein vorzugsweise für einen höhenverstellbaren Tisch nach einem der Ansprüche 1 bis 25,
**gekennzeichnet durch**
die Merkmale des höhenverstellbaren Tischbeins (6) gemäß dem kennzeichnenden Teil eines oder mehrerer der Ansprüche 15 bis 25.
